# EUROPÄISCHE PATENTSCHRIFT

(11) **EP 2 404 374 B1**
(45) Veröffentlichungstag und Bekanntmachung des Hinweises auf die Patenterteilung: **09.10.2013**
(21) Anmeldenummer: 10720243.4
(22) Anmeldetag: 01.03.2010
(51) Int. Cl.: H02P 3/22, H02P 25/14, H02M 5/293

(54) **ELEKTRODYNAMISCHE BREMSEINRICHTUNG FÜR EINEN UNIVERSALMOTOR**
ELECTRODYNAMIC BRAKING DEVICE FOR A UNIVERSAL MOTOR
DISPOSITIF DE FREINAGE ÉLECTRODYNAMIQUE POUR UN MOTEUR UNIVERSEL

(30) Priorität: 03.03.2009 DE 102009011448; 21.04.2009 DE 102009018238
(43) Veröffentlichungstag der Anmeldung: 11.01.2012
(73) Patentinhaber: Robert Bosch GmbH, 70442 Stuttgart (DE)
(72) Erfinder: ROTTMERHUSEN, Hans, Hermann, 25782 Tellingstedt (DE)
(86) Internationale Anmeldenummer: PCT/DE2010/000228
(87) Internationale Veröffentlichungsnummer: WO 2010/099787

(56) Entgegenhaltungen:
- WO-A1-91/03869
- WO-A1-2005/031963
- DE-A1- 3 428 032
- DE-A1- 10 317 636
- DE-A1- 19 912 121

## Beschreibung

Die Erfindung bezieht sich auf eine elektrodynamische Bremseinrichtung für einen Universalmotor, gemäß dem Patentanspruch 1.

Elektrodynamische Bremseinrichtungen sind in unterschiedlichen Auslegungen bekannt.

Aus DE 34 28 032 A1 ist eine Nutzbremse für einen Gleichstrom-Fahrmotor bekannt, der eine Einrichtung zum Umschalten von einem Motorbetrieb in einem Bremsbetrieb aufweist. Während des Bremsbetriebes ist eine Feldwicklung des Gleichstrom-Fahrmotors aus einem Gleichstromnetz gespeist. Zudem ist ein Anker kurzgeschlossen. Weiterhin ist ein Programm eines Controllers einer Steuerelektronik vorgesehen, das Daten beinhaltet.

Aus WO 91/03869 ist ein Verfahren und eine Vorrichtung zur variablen Einstellung eines Wechselstrommotors bekannt. Dabei wird abhängig von der gewünschten Geschwindigkeit ausgehend von einer Grundfrequenz mit Hilfe eines Frequenzkonverters eine Frequenz für die Bestromung des Wechselstrommotors bereitgestellt, die niedriger ist. Somit können die Frequenzen abhängig von der gewünschten Geschwindigkeit vorgegeben werden.

Aus WO 2005/031963 A ist ein Verfahren und eine Vorrichtung zur Steuerung eines Wechselstrommotors bekannt. Es ist eine Grundfrequenz vorgegeben und mit Hilfe eines Frequenzkonverters werden Halbwellen der Grundfrequenz verwendet, um ein Stromsignal zur Ansteuerung des Wechselstrommotors zu erstellen.

DE 199 12 121 A1 beschreibt einen Reihenschlussmotor mit Kommutator, der insbesondere für ein gebremstes Elektrowerkzeug geeignet ist, und eine Schalteinrichtung zur Umschaltung zwischen Motorbetrieb und Bremsbetrieb aufweist. Im Motorbetrieb ist mindestens eine Feldwicklung mit einer Ankerwicklung in einem von einer Versorgungsspannung beaufschlagten Motorstromkreis in Reihe geschaltet. Im Bremsbetrieb bildet die Feldwicklung mit der Ankerwicklung einen geschlossenen und von der Versorgungsspannung abgetrennten Bremsstromkreis. Zudem ist ein netzgespeister Transformator vorgesehen, dessen Sekundärwicklung im Bremsstromkreis parallel zu der mindestens einen Feldwicklung angeschlossen ist. Zudem ist eine Transistorschaltung zur Steuerung des im Bremsstromkreis über die Ankerwicklung und mindestens eine Feldwicklung fließenden Stroms vorgesehen.

DE 38 25 835 A1 beschreibt eine elektrische Bremsvorrichtung für einen Reihenschlußmotor, mit einer Feldwicklung und einem Anker und mit einer Schaltungsanordnung mit einer Phasenanschnittsteuerung, wobei während des Bremsbetriebes die Feldwicklung aus dem Netz gespeist wird, und der Anker kurzgeschlossen ist.

Diese Bremsvorrichtung ist für eine Zentrifuge bestimmt, womit das Bremsdrehmoment über den gesamten Drehzahlbereich konstant gehalten werden soll. Das Bremsdrehmoment wird durch eine drehzahlabhängige Steuereinrichtung gesteuert, wobei in der Erregerwicklung des Elektromotors ein Strom erzeugt wird, der eine umgekehrte Proportionalität zur Drehzahl des Elektromotors aufweist. Außerdem ist noch ein Bremswiderstand während des Bremsbetriebes mit dem Anker in Reihe geschaltet.

EP 0 721 694 Bl beschreibt eine elektrodynamische Bremseinrichtung für einen Elektromotor, bei der ein im Hauptstromkreis des Elektromotors liegendes Leistungsstellglied (4) in Serie geschaltet ist, mit einer Steuerung (5), die mit einem Eingang des Leistungsstellgliedes verbunden ist und im Motor- oder im Bremsbetrieb den Motorstrom über das gleiche Leistungsstellglied steuert und mit einem ersten Umschalter (13) für den Anker (1) des Elektromotors, wobei dem Anker ein zweiter Umschalter (14) derart parallel geschaltet ist, daß der mit einem ersten Kontakt (9,10) des zweiten Umschalters (14) und dem Anker gebildeten Stromkreis im Motorbetrieb unterbrochen, und im Bremsbetrieb geschlossen ist, und daß der zweite Umschalter (14) einen weiteren Kontakt (9,11) aufweist, der im Motorbetrieb einen Steuereingang der Steuerung (5) mit einer Netzklemme (P) verbindet und im Bremsbetrieb diese Verbindung unterbricht.

Der Bremsstrom soll bei dieser Lösung über einen Bremswiderstand (15) bestimmt werden, und mit dem aus dem Netz bezogenen Erregerstrom wird das Magnetfeld zum Aufbau des Bremsmomentes erzeugt, hierbei soll der Erregerstrom im Bremsfall ein pulsierender Gleichstrom sein, indem lediglich nur jede zweite Halbwelle getriggert wird.

Es wird angegeben, daß die Steuerung (5) den Bremsstrom nach einem vorgegebenen Erregerstromverlauf steuert, und/oder daß die Steuerung (5) den Bremsstrom erfaßt und diesen über die Einstellung des Erregerstroms konstant hält.

DE 102 34 397 A1 beschreibt einen gebremsten Reihenschlußmotor und ein Verfahren zum Bremsen des Reihenschlußmotors, wonach der Reihenschlußmotor im Motorbetrieb als herkömmlicher Reihenschlußmotor betrieben wird, wobei Mittel zum Umschalten in den Bremsbetrieb eine Überbrückung des Ankers und eine Fremderregung einer Feldwicklung durch die Versorgungsspannung erlauben, so daß der Motor zum Bremsen als fremderregter Gleichstromgenerator betrieben wird.

DE 28 42 145 beschreibt eine Schaltungsanordnung zur elektrischen Bremsung von Universalmotoren. Bei Abschaltung des Motorbetriebes wird der Bremsbetrieb eingeleitet, wobei die Feldwicklung weiterhin vom Netz gespeist und der Anker entweder kurzgeschlossen oder gegensinnig durchströmt wird, und bei Erreichung des Stillstandes des Motors wird der Motor durch einen Verzögerungsschalter vom Netz getrennt.

DE 103 17 636 A1 beschreibt eine Bremseinrichtung für einen Universalmotor, bei der zum Kurzschließen der Ankerwicklung (18) während des Bremsbetriebes ein Kurzschlußschalter (30) (Triac) vorgesehen ist, wobei der Kurzschlußschalter zur Ermittlung seines Schaltzustandes einen Steuereingang aufweist, und der Steuereingang des Kurzschlußschalters (30) ist mit einer Steuereinheit (28) verbunden, um während des Bremsbetriebes zur Vermeidung von Bürstenfeuer eine Phasenanschnittsteuerung des Kurzschlußschalters (30) durchzuführen.

Die bekannten elektrodynamischen Bremseinrichtungen sind für einen vorgesehenen Einsatzfall nicht ausreichend geeignet.

Der Erfindung liegt daher die Aufgabe zugrunde, eine effektive und kostengünstige elektrodynamische Bremseinrichtung für einen Universalmotor zu schaffen, mit der eine gute Bremsung bei reduziertem Bürstenfeuer und geringem Bürstenverschleiß erzielt wird, und die durch eine entsprechende Schaltungsanordnung einen betriebssicheren überwachten Bremsbetrieb und Motorbetrieb gewährleitstet, um eine solche Bremseinrichtung bei einer mit einem gefährlichen Werkzeug bestückten Maschine einsetzen zu können.

Diese Aufgabe wird durch die Merkmale des Patentanspruchs 1 gelöst. Weitere Ausgestaltungen der Erfindung sind in den Unteransprüchen und der Beschreibung dargelegt.

Die Vorteile der Erfindung werden im besonderen darin gesehen, daß ohne Umpolung der Feldwicklung oder des Ankers eine sanfte Schnellbremsung des Universalmotors bei einer guten Bürstenstandzeit erzielt wird. Der Anker ist während des Bremsbetriebes kurzgeschlossen, und die Feldwicklung ist durch eine spezielle Ansteuerung während des Bremsbetriebes aus einem Netz erregt. Die sanfte Schnellbremsung wird vorwiegend über eine einfache Hardware und eine spezielle Software erreicht, wodurch die elektrodynamische Bremseinrichtung kostengünstig ist.

Das Bürstenfeuer am Kollektor des Ankers wird während des Bremsbetriebes im besonderen dadurch reduziert, daß der Controller der Steuerelektronik ein Programm beinhaltet, womit der schädliche Aufbau eines erhöhten Lichtbogens am Kollektor unterbunden wird.

Des weiteren besitzt die Bremseinrichtung Vorrichtungen für ein sicheres Erkennen des Motorbetriebes und des Bremsbetriebes, sowie eine Überwachung der Betriebssicherheit der Steuerelektronik und der Schaltungsanordnung.

Die Erfindung wird nachstehend anhand der Zeichnung näher erläutert.

Dabei zeigt:
- Fig. 1 bis 4: Schaltungsanordnungen der elektrodynamischen Bremseinrichtung für einen Universalmotor,
- Fig. 5 bis 10: sinnbildliche grafische Darstellungen, Diagramme und Aufzeichnungen über einen Strom-Spannungsverlauf in der Feldwicklung während des Bremsbetriebes.

Elektrohandwerkzeuge, die mit einem gefährlichen Werkzeug bestückt sind, wie Handkreissägen und Winkelschleifer, werden bislang mit einer mechanischen Bremse oder mit einer elektronischen Bremseinrichtung gebremst.

Eine mechanische Bremse hat im besonderen den Nachteil, daß eine solche Bremse einem nicht unerheblichen Verschleiß unterworfen ist, und sie ist somit wartungsbedürftig, und bei den bislang bekannten elektronischen Bremseinrichtungen besteht ein erheblicher Nachteil darin, daß bei den üblicherweise zur Anwendung kommenden Universalmotoren die Bürsten und der Kollektor während des Bremsbetriebes einem hohen Verschleiß unterworfen sind.

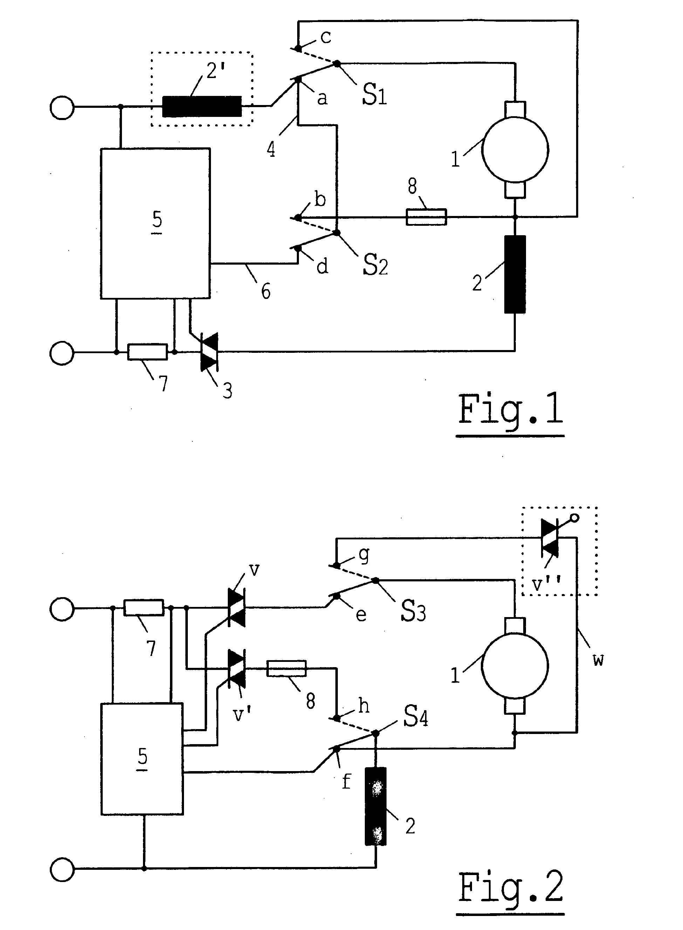

Die Fig. 1 bis 4 zeigen jeweils eine Schaltungsanordnung für einen Universalmotor, mit der eine netzabhängige Kurzschlußbremsung durchführbar ist, ohne daß die Bürsten einem nennenswerten Verschleiß unterliegen.

Fig. 1 zeigt eine Schaltungsanordnung, bei der ein erster Netzanschluß zum Motorbetriebskontakt a eines ersten Umschaltgliedes S1 führt, und ein erster Anschluß eines Ankers 1 ist mit dem ersten Umschaltglied S1 verbunden, und ein zweiter Anschluß des Ankers ist mit einem ersten Anschluß einer Feldwicklung 2 verbunden, und ein Triac 3 ist zwischen einem zweiten Anschluß der Feldwicklung und einem zweiten Netzanschluß geschaltet. Der zweite Anschluß des Ankers 1 und der erste Anschluß der Feldwicklung 2 ist mit einem Bremsbetriebskontakt b eines zweiten Umschaltgliedes S2 und mit einem Bremsbetriebskontakt c des ersten Umschaltgliedes S1 verbunden, wobei das zweite Umschaltglied S2 über eine Brücke 4 mit dem Motorbetriebskontakt a des ersten Umschaltgliedes S1 verbunden ist. Ein Erkennungskontakt d des zweiten Umschaltgliedes S2 ist mit einer Steuerelektronik 5 durch eine Leitung 6 verbunden. Die Umschaltglieder S1,S2 besitzen mindestens eine Schaltverzögerung von einer Zeit einer Halbwelle eines Netzes, damit ein sicheres Umschalten vom Motorbetrieb in den Bremsbetrieb gewährleistet ist.

Der Anker 1 ist hier einseitig mit der Feldwicklung 2 in Reihe geschaltet. Der Anker kann auch zwischen der Feldwicklung geschaltet sein, wobei dann der eine Feldwicklungsteil 2' direkt mit dem Netz verbunden ist.

Für einen geregelten Bremsbetrieb ist hier ein Shunt 7 vorgesehen, und für den Fall des Versagens der elektronischen Einrichtung kann eine Sicherung 8 während des Bremsbetriebes mit der Feldwicklung 2 in Reihe geschaltet sein.

Die Schaltungsanordnung der Fig. 1 kann auch lediglich nur mit dem zweiten Umschaltglied S2 versehen sein, wobei dann der Universalmotor einseitig direkt mit dem Netz verbunden ist, und somit das erste Umschaltglied S1 nicht benötigt wird. Aus Sicherheitsgründen ist dann die Sicherung 8 in Reihe mit dem Universalmotor geschaltet.

Die Funktionsweise der elektrodynamischen Bremseinrichtung ist die Folgende. Soll der Motorbetrieb eingeleitet werden, so wird das erste Umschaltglied S1 zum Motorbetriebskontakt a geschlossen und das zweite Umschaltglied S2 zum Erkennungskontakt d. Bei dieser Schaltstellung der Umschaltglieder ist der Universalmotor für den Motorbetrieb aktiviert und läuft vorzugsweise über einen Sanftanlauf hoch.

Wird der Motor abgeschaltet, so wird das erste Umschaltglied S1 zum Bremsbetriebskontakt c, und das zweite Umschaltglied S2 zum Bremsbetriebskontakt b geschlossen. Die Feldwicklung 2 ist nun direkt über den Triac 3 mit dem Netz verbunden, und der Anker ist über den Bremsbetriebskontakt c des ersten Umschaltgliedes S1 und über eine Brücke kurzgeschlossen. Mit dem Öffnen des Erkennungskontaktes d des zweiten Umschaltgliedes S2 wird mittels eines Controllers der Steuerelektronik 5 ein Programm für den Bremsbetrieb aktiviert, womit der Triac 3 derart angesteuert wird, daß ein in der Höhe vorbestimmter Strom über die Feldwicklung 2 fließt. Durch ein anliegendes Feld am Ständer wird der rotierende kurzgeschlossene Anker 1 entsprechend erregt. Die Feldwicklung 2 wird derart mittels des Programms des Controllers der Steuerelektronik 5 mit einer Spannung beaufschlagt, womit ein geringstes Bürstenfeuer erzielt, und eine effektivste Bremsung erreicht ist.

Soll ein sicheres Umschalten vom Motorbetrieb in den Bremsbetrieb mit einem Geräteschalter mit nicht verzögerten Umschaltgliedern erfolgen, und hierbei der Anker beidseitig mechanisch vom Netz getrennt sein, so sind hierfür drei Triacs erforderlich.

Fig. 2 zeigt eine solche Lösung. Ein erster Triac v ist mit dem ersten Netzanschluß und mit einem Motorbetriebskontakt e eines ersten Umschaltgliedes S3 verbunden, und der erste Anschluß des Ankers 1 führt zum ersten Umschaltglied S3, wobei der zweite Anschluß des Ankers mit einem Erkennungskontakt f eines zweiten Umschaltgliedes S4, und mit einem Bremsbetriebskontakt g des ersten Umschaltgliedes S3 verbunden ist, wobei der Erkennungskontakt f auch gleichzeitig ein Motorbetriebskontakt ist. Der eine Anschluß der Feldwicklung 2 ist mit dem zweiten Umschaltglied S4 verbunden, und der andere Anschluß der Feldwicklung ist am zweiten Netzanschluß angeschlossen, wobei ein zweiter Triac v' mit einem Bremsbetriebskontakt h des zweiten Umschaltgliedes S4, und mit dem ersten Netzanschluß verbunden ist.

Mit dieser Schaltungsanordnung ist der Anker während des Bremsbetriebes und in der Ausschaltstellung des Motorbetriebes beidseitig durch die Umschaltglieder S3,S4 mechanisch vom Netz getrennt. Ein sicheres Umschalten vom Motorbetrieb in den Bremsbetrieb ist hiermit aber nicht gewährleistet, da die letzte Halbwelle des Netzes des Motorbetriebes über einen Lichtbogen an den Kontakten der Umschaltglieder und über die Kurzschlußbrücke w des Ankers direkt über die Feldwicklung fließen kann, und somit der erste Triac v bis zum nächsten Nulldurchgang leitend bleibt, womit ein hoher Stromfluß über die Feldwicklung verursacht wird, der einen erheblichen Lichtbogen am Kollektor des kurzgeschlossenen Ankers bewirkt, und dieser hohe Stromfluß über die Feldwicklung auch eine Netzsicherung auslösen kann. Ein Lichtbogen an den Schaltkontakten des Geräteschalters erlischt erst beim nächsten Nulldurchgang einer Wechselspannung. Um zu verhindern, daß während des Umschaltens in den Bremsbetrieb die letzte Halbwelle des Motorbetriebes direkt über die Feldwicklung fließen kann, ist hierfür ein dritter Triac vorgesehen. Dieser Triac v" ist in die Kurzschlußbrücke w des Ankers geschaltet.

Aus der Schaltungsanordnung der Fig. 2 geht hervor, daß nach einem Umschalten vom Motorbetrieb in den Bremsbetrieb der Anker 1 durch die zwei Umschaltglieder S3, S4 an beiden Seiten vom Netz getrennt ist, und die Feldwicklung 2 nach dem Beenden des Bremsbetriebes durch den zweiten Triac v' vom Netz getrennt ist.

Eine komplette Trennung des Ankers 1 vom Netz nach dem Umschalten in den Bremsbetrieb kann auch erfolgen, wenn nur ein Triac angeordnet ist. Erforderlich ist hierfür ein zweipoliger Umschalter mit verzögerten Umschaltgliedern von mindestens der Zeit einer Halbwelle.

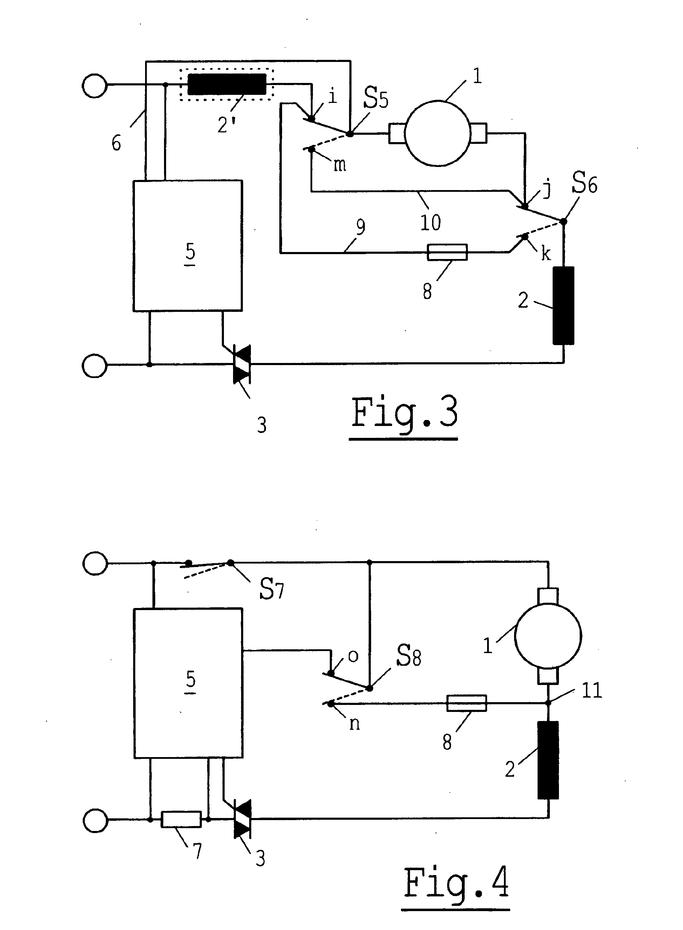

Fig. 3 zeigt eine solche Lösung. Der eine Netzanschluß führt zum Motorbetriebskontakt i des ersten Umschaltgliedes S5, und der eine Anschluß des Ankers 1 ist mit dem ersten Umschaltglied S5 verbunden, wobei der andere Anschluß des Ankers 1 mit dem Motorbetriebskontakt j des zweiten Umschaltgliedes S6 verbunden ist, und der eine Anschluß der Feldwicklung 2 ist mit dem zweiten Umschaltglied S6 verbunden, wobei der andere Anschluß der Feldwicklung über den Triac 3 zum anderen Netzanschluß führt. Der Bremsbetriebskontakt k des zweiten Umschaltgliedes S6 ist über eine Brücke 9 mit dem Motorbetriebskontakt i des ersten Umschaltgliedes S5 verbunden, und der Motorbetriebskontakt j des zweiten Umschaltgliedes S6 ist über eine Brücke 10 mit dem Bremsbetriebskontakt m des ersten Umschaltgliedes S5 verbunden.

Die Anschlußleitung 6 der Steuerelektronik 5 zur Erkennung der Schalterstellung ist hier am Umschaltglied S5 angeschlossen.

Der Anker 1 ist einseitig mit der Feldwicklung 2 in Reihe geschaltet, oder der Anker ist zwischen der Feldwicklung geschaltet, wobei dann der eine Feldwicklungsteil 2' direkt mit dem Netz verbunden ist.

Bei den Fig. 1 bis 3 ist die Feldwicklung des Universalmotors in der Ausschaltstellung des Geräteschalters nur durch einen Triac vom Netz getrennt. Eine größere Betriebssicherheit ist dadurch gewährleistet, wenn der Universalmotor zusätzlich auch noch mechanisch vom Netz getrennt wird.

Fig. 4 zeigt eine solche Lösung, bei der ein Schaltglied S7 einen Netzanschluß nach dem Beenden des Bremsbetriebes trennt. Der Anker 1 ist hier einseitig mit der Feldwicklung 2 in Reihe geschaltet, und dem Anker 1 ist ein Umschaltglied S8 parallel geschaltet, wobei das Umschaltglied S8 und der eine Anschluß des Ankers mit dem einen Netzanschluß verbunden ist, und der Bremsbetriebskontakt n des Umschaltgliedes S8 ist mit dem anderen Anschluß des Ankers und mit dem einen Anschluß der Feldwicklung verbunden, und somit am Abgriff 11 angeschlossen, wobei ein Erkennungskontakt o des Umschaltgliedes S8 über eine Leitung mit der Steuerelektronik 5 verbunden ist. Der Triac 3 ist dem Motor nachgeschaltet. Auch hier ist für die Regelung des Motors ein Shunt 7 geschaltet, und für die Betriebssicherheit während des Bremsbetriebes eine Sicherung 8 vorgesehen.

Das Umschaltglied S8 besitzt mindestens eine Schaltverzögerung von der Zeit einer Halbwelle, und das Netztrennschaltglied S7 eine Schaltverzögerung von mindestens der Zeitdauer des Bremsbetriebes.

Um bei einem Universalmotor, bei dem während des Bremsbetriebes die Feldwicklung am Netz liegt und die Ankerwicklung kurzgeschlossen ist, eine sanfte Schnellbremsung mit einer elektrodynamischen Bremseinrichtung durchführen zu können, ist ein ganz bestimmtes Programm für den Controller der Steuerelektronik vorgesehen.

Bei einer derartigen Bremseinrichtung muß berücksichtigt werden, daß durch die Bestromung der Feldwicklung mit einer Wechselspannung das anliegende Feld am Ständer nicht zeitgleich mit dem induzierten Feld am Anker ist. Die Höhe der Verschiebung ist von vielen Faktoren abhängig. Um eine zeitliche Verschiebung des Feldes am Anker zu kompensieren, werden beispielsweise Bremswiderstände im Bremskreis geschaltet. Ein Bremswiderstand müßte aber variabel steuerbar sein, damit er voll zur Wirkung kommen kann.

Dieser Aufwand kommt aber bei einem Universalmotor für Elektrowerkzeuge im Prinzip nicht zur Anwendung, da der Platzbedarf für eine solche Einrichtung nicht vorhanden, und der Kostenfaktor viel zu hoch ist.

Einen annäherungsweisen Gleichlauf des Feldes vom Ständer und Anker soll erfindungsgemäß durch spezielle Steuerelektronik gelöst werden.

Anhand von sinnbildlichen grafischen Darstellungen und eines Diagramms und Aufzeichnungen wird dieses Verfahren näher erläutert.

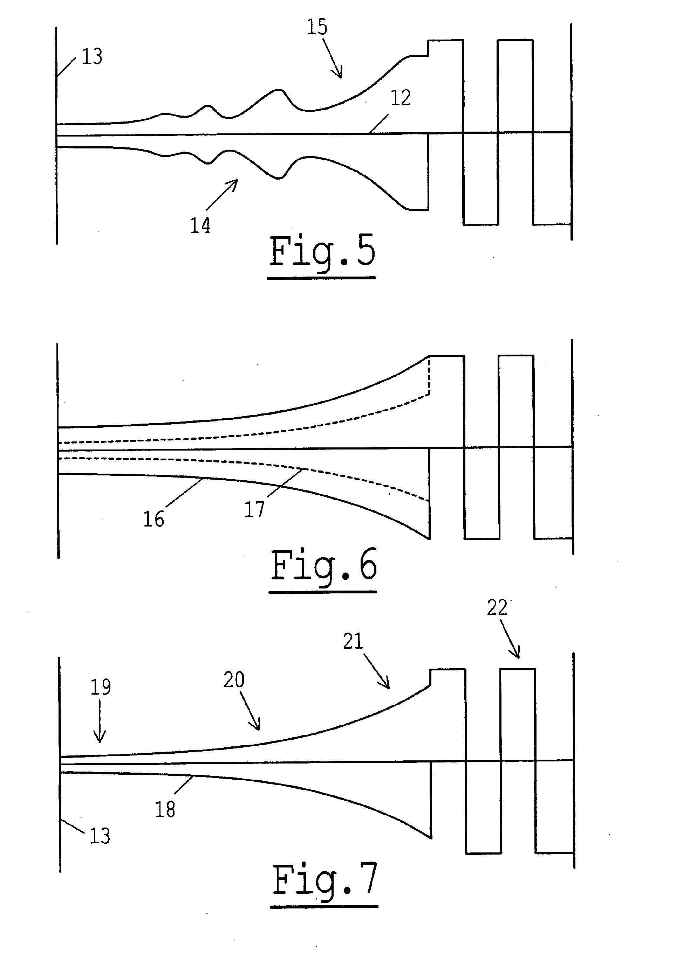

Der Nulldurchgang einer Wechselspannung des Netzes ist in den Fig. 5 bis 7 mit einer durchgehenden Linie 12 dargestellt, und die Höhe der Stromaufnahme der Feldwicklung während des Bremsbetriebes ist jeweils seitlich dieser Linie 12 dargestellt.

Fig. 5 zeigt eine sinnbildliche Darstellung des Stromverlaufs in der Feldwicklung während des Bremsbetriebes bei einer Ansteuerung des Triacs beginnend mit einem großen Zündwinkel und im weiteren Verlauf mit einem kontinuierlich gleichmäßig verkleinerten Zündwinkel.

Am Anfang 13 des Bremsbetriebes fließt ein geringer Erregerstrom über die Feldwicklung, der dann leicht ansteigt und in einem nachfolgenden ersten Bereichsabschnitt 14 steigt und fällt der Erregerstrom wellenförmig, und in einem nachfolgenden zweiten Bereichsabschnitt 15 steigt der Erregerstrom kontinuierlich an. Damit am Ende des Bremsbetriebes eine zügige Bremsung erfolgt und der Universalmotor zum Stillstand kommen kann, ist zum Ende des Bremsbetriebes die Feldwicklung mit einem Wechselstrom einer niedrigeren Frequenz wie der Netzfrequenz erregt, und dieser Wechselstrom besteht aus positiven und negativen Halbwellenpaketen. Vorzugsweise beträgt die Frequenz der Halbwellenpakete unter 10 Hz.

Ein Auf- und Abschwellen des Erregerstroms in der Feldwicklung verursacht am Kollektor des kurzgeschlossenen Ankers ein erhebliches Bürstenfeuer.

Einer Bestromung der Feldwicklung mit Halbwellenpaketen oder mit einem pulsierenden Gleichstrom während der gesamten Bremszeit ist nicht von Vorteil, da hiermit der Bürstenverschleiß erheblich ist.

Fig. 6 zeigt einerseits eine insgesamt zu hohe Stromaufnahme der Feldwicklung während des Bremsbetriebes, und andererseits eine zu niedrige Stromaufnahme, gekennzeichnet durch eine Stromkurve 16 und durch eine gestrichelte Stromkurve 17.

Damit stets eine gleiche Stromkurve während des Bremsbetriebes erzielt werden kann, ist eine geregelte Stromaufnahme der Feldwicklung vorgesehen.

Fig. 7 zeigt eine solche geregelte Stromkurve 18. Am Anfang 13 des Bremsbetriebes beginnt die Wechselstromaufnahme der Feldwicklung mit der Netzfrequenz und mit einem fest eingestellten niedrigen Wert, und im weiteren Verlauf des Bremsbetriebes in den Bereichsabschnitten 19,20,21 wird dieser Wert kontinuierlich bis zum Beginn der Halbwellenpakete 22 erhöht. Die Stromregelung erfolgt über einen Shunt 7 der Schaltungsanordnung, der vom Controller der Steuerelektronik 5 ausgewertet wird, und mit dem Programm des Controllers wird der Triac 3 entsprechend angesteuert. Über den Shunt 7 kann auch gleichzeitig das Drehmoment während des Motorbetriebes, bei einer Absenkung der Leerlaufdrehzahl des Universalmotors, geregelt werden. Über den Shunt 7 läßt sich auch gut eine Überlastung des Universalmotors, und eine Blockierung des Elektrowerkzeugs ermitteln. In einem solchen Fall wird die Stromzufuhr zum Universalmotor entsprechend zurückgefahren oder ganz von der Steuerelektronik 5 unterbunden.

Für den Bremsbetrieb beinhaltet der Controller der Steuerelektronik 5 ein entsprechendes Programm und entsprechende Daten, womit eine sanfte Schnellbremsung bei einem geringstmöglichen Bürstenfeuer erzielt wird.

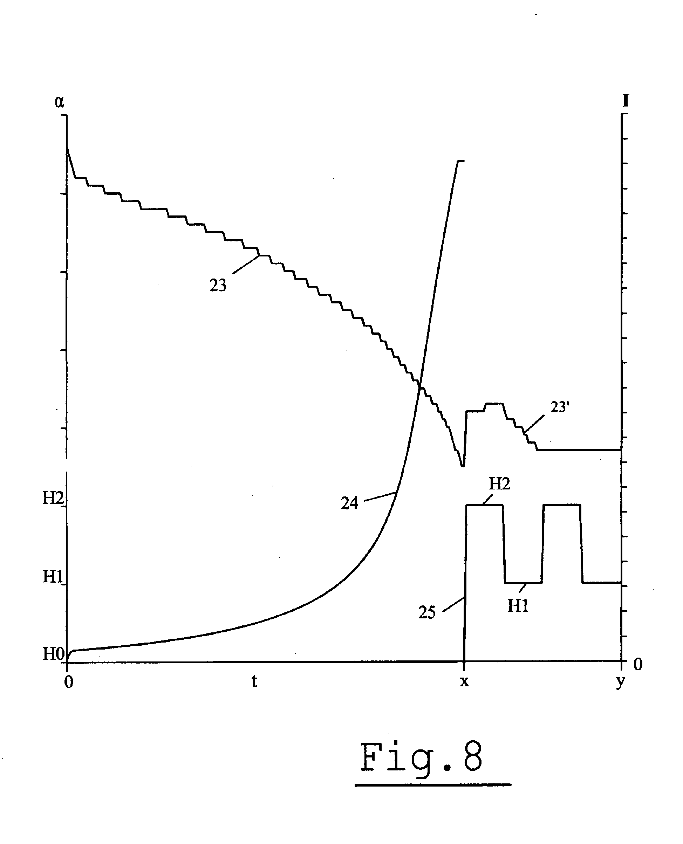

Fig. 8 zeigt ein Diagramm von Steuerkurven und Regeldaten eines Programms des Controllers der Steuerelektronik. Eine Tabelle einer Steuerkurve für den Phasenanschnittwinkel des Bremsbetriebes ist mit einer ersten und einer zweiten Phasenanschnittwinkelkurve 23,23' dargestellt, und die Daten eines Stromsollwertes sind mit einer Stromsollwertkurve 24 dargestellt, wobei die Phasenanschnittwinkelkurve 23 so gewählt ist, daß die Stromsollwertkurve 24 im Prinzip erreicht ist. Abweichungen von der Stromsollwertkurve 24 werden durch einen Stromregler korrigiert. Bei entsprechend ausgelegtem Universalmotor kann auf einen Stromregler verzichtet werden. Die Stromsollwertkurve 24 kann auch ohne die Phasenanschnittwinkelkurve 23 mit dem Stromregler erreicht werden, indem am Anfang der Stromsollwertkurve 24 dem Stromregler ein Phasenanschnittwinkel vorgegeben ist. Das Programm des Controllers für die erste Phasenanschnittwinkelkurve 23 ist am Anfang eines Bremsbetriebes in einer Zeit von 0 bis x (H0) aktiv, wobei die Feldwicklung mit einem Wechselstrom entsprechend einer Netzfrequenz beaufschlagt ist. Das Programm des Controllers für die zweite Phasenanschnittwinkelkurve 23' ist am Ende des Bremsbetriebes in einer Zeit von x bis y für eine Halbwellensteuerung aktiv, und die Feldwicklung ist mit einem Wechselstrom einer niedrigeren Frequenz wie der Netzfrequenz beaufschlagt, entsprechend der Halbwellenpakete H2 und H1, dargestellt durch eine Halbwellensteuerkurve 25. Die Halbwellenpakete sind hier ungeregelt, wobei die Halbwellenpakete auch geregelt sein können. Die Halbwellensteuerkurve 25 ist durch die zweite Phasenanschnittwinkelkurve 23' vorgegeben. Die Halbwellenpakete H1 können positiv sein, wobei dann die Halbwellenpakete H2 negativ sind, oder die Halbwellenpakete H1 können negativ sein, wobei dann die Halbwellenpakete H2 positiv sind.

Damit das Bürstenfeuer und somit der Bürstenverschleiß während des Bremsbetriebes bei einem Universalmotor ohne Bürstenverstellung gering gehalten werden kann, ist der Bremsbetrieb grundsätzlich mit einem Wechselstrom einer Netzfrequenz durchzuführen, womit der Bürstenverschleiß am geringsten ist. Eine Felderregung mit Gleichstrom oder mit pulsierendem Gleichstrom verursacht einen hohen Bürstenverschleiß. Da für den Bremsbetrieb die Felderregung aus einem Netz bei einem kurzgeschlossenen Anker erfolgt, ist der Bremsvorgang schwierig zu steuern, wenn ein reduziertes Bürstenfeuer bei gleicher Bremszeit erzielt werden soll. Daher betragen bei den vorgegebenen Phasenanschnittwinkelkurven 23,23' die Phasenanschnittwinkelschritte weniger als ein Prozent, wobei selbst hierbei noch große Stromaufnahmeschwankungen der Felderregung erfolgen können, die ein erhebliches Bürstenfeuer verursachen. Größere Stromaufnahme-Schwankungen der Feldwicklung werden daher durch die vorgegebene Stromsollwertkurve 24 verhindert. Außerdem bewirkt die vorgegebene Stromsollwertkurve 24, daß durch Abnutzung der Bürsten und somit durch Reduzierung des Bürstenandrucks, die Bremszeit konstant bleibt.

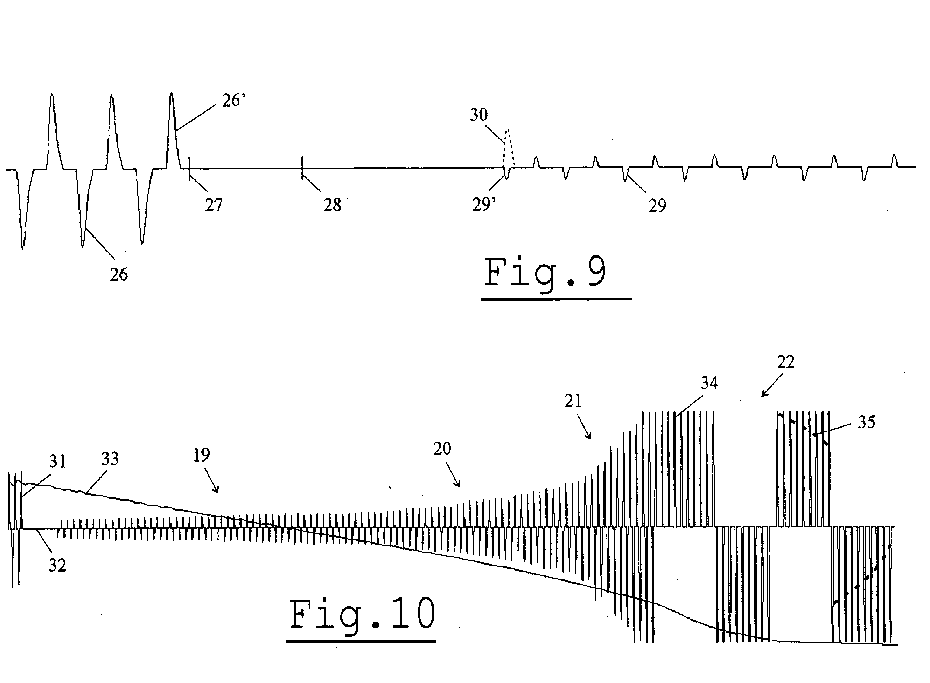

Fig. 9 zeigt eine Aufzeichnung über einen Stromverlauf von angeschnittenen Vollwellen des Netzes während eines Überganges vom Motorbetrieb in den Bremsbetrieb. Ein Leerlaufbetrieb des Universalmotors ist durch angeschnittene Vollwellen 26 des Netzes dargestellt. An einer Markierungsstelle 27 ist vom Motorbetrieb in den Bremsbetrieb umgeschaltet worden, und die Umschaltglieder des Geräteschalters haben von den Motorbetriebskontakten abgehoben. An einer Markierungsstelle 28 liegen die Umschaltglieder des Geräteschalters an den Bremsbetriebskontakten an. Die Umschaltglieder besitzen hier somit eine Schaltverzögerung von etwa vier Halbwellen. Innerhalb der Schaltverzögerung der Umschaltglieder schaltet der Controller der Steuerelektronik vom Motorbetrieb in den Bremsbetrieb um. Nach etwa sechs Halbwellen beginnt das Bremsprogramm mit einem großen Anschnitt der Halbwellen 29 des Netzes, wobei das Bremsprogramm auch früher beginnen kann. Das Programm des Controllers ist so ausgelegt, daß stets eine erste Halbwelle 29' für den Bremsbetrieb eine entgegengesetzte Polarität aufweist wie die Polarität der letzten Halbwelle 26' des Motorbetriebes. Wird der Motorbetrieb mit einer positiven Halbwelle beendet, so beginnt der Bremsbetrieb mit einer negativen Halbwelle, und wird der Motorbetrieb mit einer negativen Halbwelle beendet, so beginnt der Bremsbetrieb mit einer positiven Halbwelle. Dieser Halbwellenwechsel ist notwendig, da bei einer gleichen Polarität der Halbwellen während eines Wechsels vom Motorbetrieb in Bremsbetrieb der Stromfluß der ersten Halbwelle durch die Feldwicklung am Anfang des Bremsbetriebes sehr hoch sein kann, gekennzeichnet durch die gestrichelte Halbwelle 30, und einen nicht unerheblichen Lichtbogen am Kollektor des Ankers verursacht. Dieser hohe Stromfluß der ersten Halbwelle 29' des Bremsbetriebes wird dadurch verursacht, daß der magnetische Rückstand im Eisen der Ständerpole die gleiche Polarität wie die letzte Halbwelle 26' des Motorbetriebes aufweist, und daher die Ständerpole vormagnetisiert sind.

Fig. 10 zeigt eine Aufzeichnung über einen Stromverlauf in der Feldwicklung während des Bremsbetriebes. Ein Leerlaufbetrieb ist durch einen aufgezeichneten Strom von angeschnittenen Vollwellen 31 dargestellt, und zwischen einer Umschaltung vom Netzbetrieb in den Bremsbetrieb liegt mindestens ein Nulldurchgang. Nach einer Umschaltzeit 32 vom Motorbetrieb in den Bremsbetrieb ist die Stromaufnahme in der Feldwicklung am Anfang gering, wobei der Strom des Netzes im weiteren Verlauf im ersten Bereichsabschnitt 19 kontinuierlich nur leicht ansteigt und im zweiten Bereichabschnitt 20 etwas stärker ansteigt und im dritten Bereichsabschnitt 21 steil ansteigt, und hierdurch die Drehzahlkurve 33 einen annähernd geradlinig abfallenden Verlauf aufweist, wodurch die Drehzahl des Universalmotors während des Bremsbetriebes kontinuierlich gleichmäßig abnimmt. Im vierten Bereichsabschnitt 22 erfolgt die Wechselstromaufnahme in der Feldwicklung mit einer niedrigen Frequenz, so daß positive und negative Halbwellenpakete an der Feldwicklung anliegen. Die Drehzahl des Universalmotors nimmt während des Bremsbetriebes gleichmäßig bis hin zu den Halbwellenpaketen kontinuierlich ab, und durch die Halbwellenpakete kommt der Motor schnell zum Stillstand. Die Halbwellenpakete wechseln stets bei Neueinschaltung des Universalmotors ihre Polaritätsabfolge, indem das erste Halbwellenpaket 34 bei der einen Bremsung positive Halbwellen, und bei einer darauffolgenden Bremsung negative Halbwellen aufweist, hierdurch wird eine gleichmäßige Abnutzung der Bürsten erzielt. Eine Beaufschlagung der Feldwicklung des Universalmotors zum Ende des Bremsbetriebes mit Halbwellenpaketen ist deshalb erforderlich, da bei einer Beaufschlagung der Feldwicklung mit einem Wechselstrom einer Frequenz des Netzes der Universalmotor zum Ende des Bremsbetriebes angetrieben wird.

Weil je nach Beschaffenheit des Universalmotors zum Ende der Bremszeit das induktive Feld am Anker höher sein kann wie das induzierte Feld, kann das anliegende Feld an der Feldwicklung den Anker des Universalmotors zum Ende der Bremszeit antreiben. Daher kann es zweckmäßig sein, die Stromaufnahme der Feldwicklung zum Ende der Bremszeit stark zu senken, gekennzeichnet durch eine gestrichelte Linie 35, oder das Netz wird vorzeitig abgeschaltet.

Um den Bürstenverschleiß bei einem gebremsten Universalmotor noch weiter zu reduzieren, kann die Leerlaufdrehzahl in dem Bereich des Nennbetriebes des Universalmotors abgesenkt werden, wobei dem Universalmotor dann eine Drehzahlerfassungseinrichtung zugeordnet ist. Eine Absenkung der Leerlaufdrehzahl ist besonders bei einem Winkelschleifer oder einer Handkreissäge von Vorteil, da hierbei ein sicheres Ansetzen des Werkzeugs erleichtert ist. Sobald das Werkzeug belastet ist, wird das Drehmoment entsprechend der Belastung des Werkzeugs nachgesteuert.

## Patentansprüche

1. Elektrodynamische Bremseinrichtung für einen Universalmotor mit einer Einrichtung zum Umschalten von einem Motorbetrieb in einen Bremsbetrieb,
- wobei während des Bremsbetriebes eine Feldwicklung (2) des Universalmotors aus einem Netz gespeist ist und ein Anker (1) kurzgeschlossen ist,
- wobei ein Programm eines Controllers einer Steuerelektronik (5) Daten beinhaltet,
- für eine erste und eine zweite Phasenanschnittwinkelkurve (23;23') und für eine Stromsollwertkurve (24) und für eine Halbwellensteuerkurve (25),
- wobei das Programm des Controllers für die erste Phasenanschnittwinkelkurve (23) am Anfang einer Bremszeit (0 bis x) aktiv ist und so gewählt ist, daß hiermit die vorgegebene Stromsollwertkurve (24) erreicht ist, und die Feldwicklung (2) mit einem Wechselstrom mit einer Netzfrequenz beaufschlagt ist,
- und das Programm des Controllers für die zweite Phasenanschnittwinkelkurve (23') am Ende der Bremszeit (x bis y) zur Erzeugung von Halbwellenpaketen (22;H1,H2) aktiv ist, und die Feldwicklung (2) mit einem Wechselstrom mit einer niedrigeren Frequenz wie der Netzfrequenz beaufschlagt ist.

2. Elektrodynamische Bremseinrichtung nach Anspruch 1,
**dadurch gekennzeichnet, daß** über einen Shunt (7) während des Bremsbetriebes ein Iststromwert für einen Stromregler der Steuerelektronik (5) ermittelt ist, und die Stromsollwertkurve (24) durch den Stromregler über die Phasenanschnittwinkelkurve (23) erreicht ist, oder daß während des Bremsbetriebes die Erregung der Feldwicklung (2) nur über die Phasenanschnittwinkelkurven (23,23') erreicht ist.

3. Elektrodynamische Bremseinrichtung nach Anspruch 1,
**dadurch gekennzeichnet, daß** die Stromsollwertkurve (24) direkt mit einem Stromregler erreicht ist, wobei dem Stromregler am Anfang des Bremsbetriebes ein Phasenanschnittwinkel vorgegeben ist.

4. Elektrodynamische Bremseinrichtung nach Anspruch 1 bis 3,
**dadurch gekennzeichnet, daß** die Halbwellenpakete (22) ungeregelt sind, oder daß die Halbwellenpakete geregelt sind, und daß eine Stromaufnahme der Feldwicklung (2) zum Ende der Bremszeit stark reduziert ist (35).

5. Elektrodynamische Bremseinrichtung nach Anspruch 1 bis 4,
**dadurch gekennzeichnet, daß** eine Steuerkurve der Phasenanschnittwinkelkurven (23,23') sowie Regeldaten eines Stromsollwertes der Stromsollwertkurve (24) mit einer Tabelle oder mit einer mathematischen Funktion des Programms des Controllers gebildet sind.

6. Elektrodynamische Bremseinrichtung nach Anspruch 1 bis 5,
**dadurch gekennzeichnet, daß** zwischen einer Umschaltung vom Motorbetrieb in den Bremsbetrieb mindestens ein Nulldurchgang des Netzes liegt, daß stets eine erste Halbwelle (29') des Bremsbetriebes eine entgegengesetzte Polarität besitzt wie die Polarität einer letzten Halbwelle (26') des Motorbetriebes, daß Halbwellenpakete (22) stets bei Neueinschaltung des Universalmotors eine Abfolge ihrer Polarität wechseln, indem das erste Halbwellenpaket (34) bei einer Bremsung positive Halbwellen, und bei einer darauf folgenden Bremsung negative Halbwellen aufweist.

7. Elektrodynamische Bremseinrichtung nach Anspruch 1 bis 6,
**dadurch gekennzeichnet, daß** am Anker während des Bremsbetriebes ein derartig verlaufendes Moment anliegt, womit eine annähernd geradlinig abfallende Drehzahlkurve (33) erzielt ist, wobei während des Bremsbetriebes am Anfang eine Stromaufnahme in der Feldwicklung gering ist, und im weiteren Verlauf im ersten Bereichsabschnitt (19) kontinuierlich nur leicht ansteigt, und im zweiten Bereichsabschnitt (20) etwas stärker ansteigt, und im dritten Bereichsabschnitt (21) steil ansteigt.

8. Elektrodynamische Bremseinrichtung nach Anspruch 1 bis 7, **dadurch gekennzeichnet, daß** zur Erkennung des Motorbetriebes und des Bremsbetriebes der Steuerelektronik (5) ein Erkennungsanschluß zugeordnet ist, der zu einem Umschaltglied eines Geräteschalters führt, und die Umschaltglieder des Geräteschalters eine Schaltverzögerung von mindestens einer Zeitdauer einer Halbwelle des Netzes aufweisen bevor die Umschaltglieder jeweils an einem Bremsbetriebskontakt anliegen.

9. Elektrodynamische Bremseinrichtung nach Anspruch 1 bis 8, **dadurch gekennzeichnet, daß** ein Erkennungsanschluß (6) der Steuerelektronik (5) während des Motorbetriebes über ein Umschaltglied des Geräteschalters direkt mit einem Netzanschluß verbunden ist oder über ein Umschaltglied und der Feldwicklung (2,2') mit einem Netzanschluß verbunden ist, daß der Anker (1) nach einem Umschalten in einen Bremsbetrieb durch zwei verzögerte Umschaltglieder (S3,S4;S5,S6) beidseitig vom Netz getrennt ist, und nach einem Beenden des Bremsbetriebes die Feldwicklung (2) durch einen Triac vom Netz getrennt ist.

10. Elektrodynamische Bremseinrichtung nach einem der Ansprüche, **dadurch gekennzeichnet, daß** für eine beidseitige mechanische Trennung des Ankers (1) durch einen Geräteschalter mit nicht verzögerten Umschaltgliedern (S3,S4) in einer Schaltungsanordnung drei Triacs (v,v',v") vorgesehen sind, und ein erster Triac (v) während des Motorbetriebes über ein erstes Umschaltglied (S3) in Reihe mit dem Universalmotor geschaltet ist, und ein zweiter Triac (v') während des Bremsbetriebes über ein zweites Umschaltglied (S4) in Reihe mit der Feldwicklung (2) geschaltet ist, und ein dritter Triac (v") in eine Kurzschlußbrücke (w) des Ankers (1) geschaltet ist.

## Claims

1. Electrodynamic braking device for a universal motor having a device for switching from motor operation to braking operation,
- wherein, during braking operation, a field winding (2) of the universal motor is fed from a power supply system and an armature (1) is shorted,
- wherein a program for a controller in control electronics (5) contains data,
- for a first and a second phase gating angle curve (23; 23') and for a current nominal value curve (24) and for a half-cycle control curve (25),
- wherein the program for the controller is active for the first phase gating angle curve (23) at the start of a braking time (0 to x), and is chosen such that this results in the predetermined current nominal value curve (24), and an alternating current at a power supply system frequency is applied to the field winding (2),
- and the program for the controller is active for the second phase gating angle curve (23') at the end of the braking time (x to y) in order to produce half-cycle packets (22; H1, H2) and an alternating current at a lower frequency than the power supply system frequency is applied to the field winding (2).

2. Electrodynamic braking device according to Claim 1,
**characterized in that**
an actual current value for a current regulator for the control electronics (5) is determined via a shunt (7) during braking operation, and the current nominal value curve (24) is achieved by the current regulator via the phase gating angle curve (23), or **in that**, during braking operation, the excitation of the field winding (2) is achieved only via the phase gating angle curves (23, 23').

3. Electrodynamic braking device according to Claim 1,
**characterized in that**
the current nominal value curve (24) is achieved directly by a current regulator, wherein a phase gating angle is predetermined for the current regulator at the start of braking operation.

4. Electrodynamic braking device according to Claims 1 to 3,
**characterized in that**
the half-cycle packets (22) are unregulated, or **in that** the half-cycle packets are regulated, and **in that** the current drawn by the field winding (2) is greatly reduced (35) at the end of the braking time.

5. Electrodynamic braking device according to Claims 1 to 4,
**characterized in that**
a control curve of the phase gating angle curves (23, 23') as well as control data for a current nominal value of the current nominal value curve (24) are formed using a table or using a mathematical function of the program for the controller.

6. Electrodynamic braking device according to Claims 1 to 5,
**characterized in that**
there is at least one zero crossing of the power supply system between switching from motor operation to braking operation, **in that** a first half-cycle (29') in braking operation is always of opposite polarity to the polarity of a last half-cycle (26') during motor operation, **in that** half-cycle packets (22) always change a sequence of their polarity when the universal motor is switched on again, **in that** the first half-cycle packet (34) has positive half-cycles during braking, and has negative half-cycles during subsequent braking.

7. Electrodynamic braking device according to Claims 1 to 6,
**characterized in that**
a torque is present on the armature during braking operation, which torque has a profile to achieve an approximately linearly falling rotation-speed curve (33), wherein the current drawn in the field winding is initially low during braking operation and rises only slightly continuously in the first area section (19) from then on, and rises somewhat more greatly in the second area section (22) and rises steeply in the third area section (21).

8. Electrodynamic braking device according to Claims 1 to 7,
**characterized in that**
an identification connection is associated with the control electronics (5) in order to identify motor operation and braking operation, and which identification connection leads to a switching element of an appliance switch, and the switching elements of the appliance switch have a switching delay of at least one time period of a half-cycle of the power supply system before the switching elements each make contact with a brake operating contact.

9. Electrodynamic braking device according to Claims 1 to 8,
**characterized in that**
an identification connection (6) of the control electronics (5) is directly connected to a power supply system connection via a switching element of the appliance switch during motor operation, or is connected to a power supply system connection via a switching element and the field winding (2, 2'), **in that** the armature (1) is disconnected from the power supply system on both sides by two delayed switching elements (S3, S4; S5, S6) after switching to braking operation, and the field winding (2) is disconnected from the power supply system by a triac after the end of braking operation.

10. Electrodynamic braking device according to one of the claims,
**characterized in that**
three triacs (v, v', v") are provided in a circuit arrangement for mechanical disconnection of the armature (1) on both sides by an appliance switch with non-delayed switching elements (S3, S4), and a first triac (v) is connected in series with the universal motor via a first switching element (S3) during motor operation, and a second triac (V') is connected in series with the field winding (2) via a second switching element (S4) during braking operation, and a third triac (v") is connected to a shorting link (w) of the armature (1).

## Revendications

1. Dispositif de freinage électrodynamique pour un moteur universel comportant un dispositif de commutation d'un fonctionnement motorisé à un fonctionnement de freinage,
- dans lequel pendant le fonctionnement de freinage un enroulement de champ (2) du moteur universel est alimenté à partir d'un réseau et une ancre (1) est court-circuitée,
- dans lequel un programme d'un contrôleur d'une électronique de commande (5) contient des données,
- pour une première et une deuxième courbe angulaire de découpage de phase (23 ; 23') et pour une courbe de valeur de courant de consigne (24) et pour une courbe de commande de demi-onde (25),
- dans lequel le programme du contrôleur est actif pour la première courbe angulaire de découpage de phase (23) au début d'un temps de freinage (0 à x) et sélectionné de telle sorte que la courbe de valeur de courant de consigne (24) prescrite soit ainsi atteinte, et l'enroulement de champ (2) est sollicité par un courant alternatif avec une fréquence de réseau,
- et le programme du contrôleur est actif pour la deuxième courbe angulaire de découpage de phase (23') à la fin du temps de freinage (x à y) afin de générer des paquets de demi-ondes (22 ; H1, H2), et l'enroulement de champ (2) est sollicité par un courant alternatif avec une fréquence plus basse que la fréquence du réseau.

2. Dispositif de freinage électrodynamique selon la revendication 1, **caractérisé en ce que** par l'intermédiaire d'un shunt (7) pendant le fonctionnement de freinage, une valeur de courant effective pour un régulateur de courant de l'électronique de commande (5) est déterminé, et la courbe de valeur de courant de consigne (24) est atteinte par le régulateur de courant par l'intermédiaire de la courbe angulaire de découpage de phase (23), ou **en ce que** pendant le fonctionnement de freinage l'excitation de l'enroulement de champ (2) est atteint seulement par l'intermédiaire des courbes angulaires de découpage de phase (23, 23').

3. Dispositif de freinage électrodynamique selon la revendication 1, **caractérisé en ce que** la courbe de valeur de courant de consigne (24) est atteinte directement avec un régulateur de courant, dans lequel un angle de découpage de phase est prescrit au régulateur de courant au début du fonctionnement de freinage.

4. Dispositif de freinage électrodynamique selon les revendications 1 à 3, **caractérisé en ce que** les paquets de demi-ondes (22) sont déréglés ou **en ce que** les paquets de demi-ondes sont réglés, et **en ce qu'**une consommation électrique de l'enroulement de champ (2) est fortement réduite (35) à la fin de temps de freinage.

5. Dispositif de freinage électrodynamique selon les revendications 1 à 4, **caractérisé en ce que** une courbe de commande des courbes angulaires de découpage de phase (23, 23') ainsi que des données de régulation d'une valeur de courant de consigne de la courbe de valeur de courant de consigne (24) sont formées avec un tableau avec une fonction mathématique du programme du contrôleur.

6. Dispositif de freinage électrodynamique selon les revendications 1 à 5, **caractérisé en ce que** entre une commutation du fonctionnement motorisé au fonctionnement de freinage, au moins un passage par zéro du réseau est présent, **en ce que** constamment une première demi-onde (29') du fonctionnement de freinage possède une polarité opposée à la polarité d'une dernière demi-onde (26') du fonctionnement motorisé, **en ce que** des paquets de demi-ondes (22) changent une séquence de leur polarité constamment lors de la reconnexion du moteur universel, du fait que le premier paquet de demi-ondes (34) présente lors d'un freinage des demi-ondes positives, et lors d'un freinage consécutif des demi-ondes négatives.

7. Dispositif de freinage électrodynamique selon les revendications 1 à 6, **caractérisé en ce que** au niveau de l'ancre pendant le fonctionnement de freinage, un couple s'étendant de sorte qu'une courbe de vitesse de rotation (33) chutant approximativement en ligne droite soit obtenue est présent, dans lequel pendant le fonctionnement de freinage au début une consommation électrique dans l'enroulement de champ est minime, et par la suite dans la première portion de zone (16) augmente seulement légèrement en continu, et dans la deuxième portion de zone (20) augmente quelque peu plus fort, et dans la troisième portion de zone (21) augmente abruptement.

8. Dispositif de freinage électrodynamique selon les revendications 1 à 7, **caractérisé en ce que** afin de détecter le fonctionnement motorisé et le fonctionnement de freinage, un raccord de détection est coordonné à l'électronique de commande (5), qui mène à un organe de commutation d'un interruption d'appareil, et les organes de commutation de l'interrupteur d'appareil présentent un retard de commutation d'au moins une durée temporelle correspondant à une demi-onde du réseau avant que les organes de commutation viennent respectivement reposer sur un contact de fonctionnement de freinage.

9. Dispositif de freinage électrodynamique selon les revendications 1 à 8, **caractérisé en ce que** un raccord de détection (6) de l'électronique de commande (5) pendant la fonctionnement motorisé est relié directement à un raccord de réseau par l'intermédiaire d'un organe de commutation de l'interrupteur d'appareil ou par l'intermédiaire d'un organe de commutation et l'enroulement de champ (2, 2') est relié à un raccord de réseau, **en ce que** l'ancre (1) après une commutation à un fonctionnement de freinage est séparée du réseau des deux côtés par l'intermédiaire de deux organes de commutation retardés (S3, S4 ; S5, S6), et après une fon du fonctionnement de freinage l'enroulement de champ (2) est séparé du réseau par un triac.

10. Dispositif de freinage électrodynamique selon une des revendications, **caractérisé en ce que** pour une séparation mécanique de l'ancre (1) des deux côtés par un interrupteur d'appareil avec des organes de commutation non retardés (S3, S4) dans un agencement de circuit, trois triacs (v, v', v") sont prévus, et un premier triac (v) est branché en série avec le moteur universel pendant le fonctionnement motorisé par l'intermédiaire d'un premier organe de commutation (S3), et un deuxième triac (v') est branché en série avec l'enroulement de champ (2) pendant le fonctionnement de freinage par l'intermédiaire d'un deuxième organe de commutation (S4), et un troisième triac (v") est branché dans un pont de court-circuit (w) de l'ancre (1).
